# EUROPÄISCHE PATENTANMELDUNG

(11) **EP 1 809 053 A1**
(43) Veröffentlichungstag der Anmeldung: **18.07.2007**
(21) Anmeldenummer: 06000637.6
(22) Anmeldetag: 12.01.2006
(51) Int. Cl.: H04Q 7/30

(54) **Anordnung zur Kombination von Ausgangssignalen zweier Basisstationen**

(71) Anmelder: SIEMENS AKTIENGESELLSCHAFT, 80333 München (DE)
(72) Erfinder: Splett, Armin, Dr., 89081 Ulm (DE)

(57) **Zusammenfassung**

Die Erfindung betrifft eine Anordnung zur Kombination von Ausgangssignalen zweier Basisstationen. Eine Sendeeinheit, die zwischen der ersten Basisstation und einer Antennenanordnung angeordnet ist, umfasst einen digitalen Filter, eine Vorverzerrungseinrichtung mit einem ersten und mit einem zweiten Eingang, einen D/A-Wandler und einen Sendeleistungsverstärker. Die erste Basisstation ist ausgangsseitig über den Filter mit dem ersten Eingang der Vorverzerrungseinrichtung verbunden, so dass ein digitales Ausgangssignal der ersten Basisstation als erstes Eingangssignal an die Vorverzerrungseinrichtung gelangt.
Die zweite Basisstation ist ausgangsseitig über eine Umwandlungseinrichtung, die aus dem Ausgangssignal der zweiten Basisstation das zweite Eingangssignal bildet, mit dem zweiten Eingang der Vorverzerrungseinrichtung verbunden.

## Beschreibung

Die Erfindung betrifft eine Anordnung zur Kombination von Ausgangssignalen zweier Basisstationen gemäß dem Oberbegriff des Patentanspruchs 1.

Aufgrund der begrenzten Anzahl an geeigneten Antennenstandorten wird es mit der Einführung von neuen Funkkommunikationsstandards bzw. neuer Funkübertragungsverfahren in Zukunft notwendig werden, mehrere Trägersignale von Basisstationen unterschiedlicher Funkkommunikationsstandards zusammenzufassen und diese über eine gemeinsame Antennenanordnung abzustrahlen.

Mit dem so genannten "breitbandigen Hybrid-Combining" werden bei niedrigen Leistungspegeln mehrere Trägerfrequenzen verschiedener Funkkommunikationsstandards zusammengefasst, verstärkt und abgestrahlt. Zur Verstärkung wird ein hochlinearer, analoger Sendeleistungsverstärker verwendet, wobei zur Linearisierung ggf. ein Vorverzerrungsverfahren zusätzlich angewendet wird. Derartige Sendeleistungsverstärker sind beispielsweise in "RF Power Amplifiers for Wireless Communications", von Steve C. Cripps, Artech House, Boston, 1999, näher beschrieben, wobei diese aufgrund von hohen technischen Anforderungen nur sehr teuer realisierbar sind.

Es ist Aufgabe der vorliegenden Erfindung, eine Anordnung zur kostengünstigen Kombination von Ausgangssignalen einer ersten und einer zweiten Basisstation anzugeben, um die kombinierten Ausgangssignale einer gemeinsamen Antennenanordnung zur Abstrahlung zuzuführen.

Die Aufgabe wird durch die Merkmale des Patentanspruchs 1 gelöst. Vorteilhafte Weiterbildungen sind in den Unteransprüchen angegeben.

Mit Hilfe der vorliegenden Erfindung ist es möglich, mit geringem Aufwand ein Ausgangssignal einer bereits installierten ersten Basisstation mit einem Ausgangssignal einer neu hinzukommenden zweiten Basisstation zu kombinieren und dieses über eine gemeinsame Antennenanordnung abzustrahlen.

Mit Hilfe der vorliegenden Erfindung ist es bei geringem Aufwand möglich, beliebig kleine Trägerfrequenzabstände zu realisieren.

Weiterhin ist es möglich, einen sehr hohen Gesamtwirkungsgrad zu erreichen, da das zu verstärkende Signal als digitales, zeitdiskretes Gesamtsignal vorliegt:
Auf das Gesamtsignal können Algorithmen angewendet werden, die das Verhältnis zwischen Spitzenleistung einerseits und mittlerer Leistung andererseits reduzieren. Dieses Verhältnis ist als "Peak-to-Average-Verhältnis, PAR" bekannt. Dadurch werden bessere Wirkungsgrade im Sendeleistungsverstärker ermöglicht.
Das vorliegende Gesamtsignal kann digital vorverzerrt werden, um die Endstufe des Sendeleistungsverstärkers optimal auszusteuern bei gleichzeitig hoher Gesamtlinearität der Verstärkerkennlinie. Durch diese Vorentzerrung wird ebenfalls ein verbesserter Gesamtwirkungsgrad ermöglicht.
Die Erfindung wird nachfolgend anhand einer Zeichnung näher erläutert. Dabei zeigt:
   - FIG 1: eine erste Ausgestaltung der erfindungsgemäßen Anordnung für eine Zusammenfassung eines digitalen Ausgangssignals einer ersten Basisstation und eines analogen Ausgangssignals einer zweiten Basisstation,
   - FIG 2: eine zweite Ausgestaltung der erfindungsgemäßen Anordnung für eine Zusammenfassung eines digitalen Ausgangssignals einer ersten Basisstation und eines analogen Ausgangssignals einer zweiten Basisstation, und
   - FIG 3: eine dritte Ausgestaltung der erfindungsgemäßen Anordnung für eine Zusammenfassung von digitalen Ausgangssignalen einer ersten und einer zweiten Basisstation.

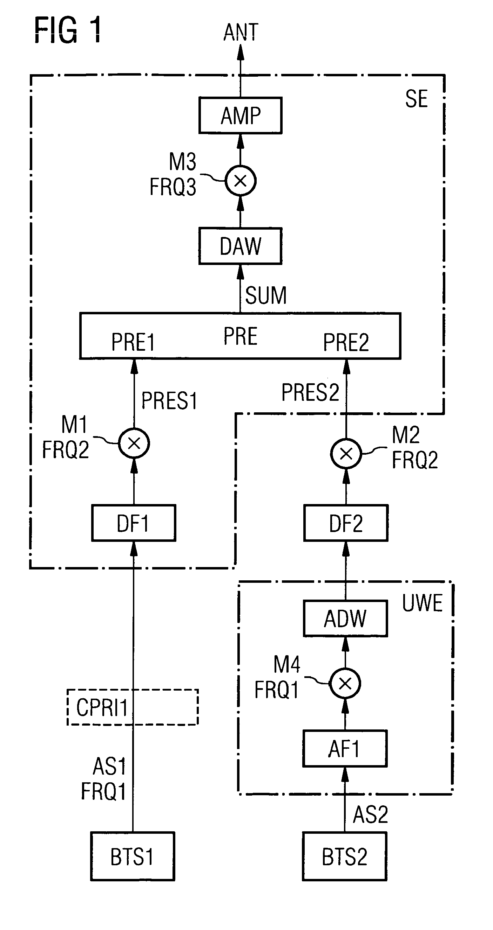

FIG 1 zeigt eine erste Ausgestaltung der erfindungsgemäßen Anordnung für eine Zusammenfassung eines digitalen Ausgangssignals AS1 einer ersten Basisstation BTS1 und eines analogen Ausgangssignals AS2 einer zweiten Basisstation BTS2, wobei die zusammengefassten bzw. kombinierten Signale nach einer durchzuführenden Signalbearbeitung zur Abstrahlung an eine gemeinsame Antennenanordnung ANT gelangen sollen.

Dabei ist zwischen der ersten Basisstation BTS1 und der Antennenanordnung ANT eine Sendeeinheit SE angeordnet, die einen digitalen Filter DF1, eine Vorverzerrungseinrichtung PRE, einen D/A-Wandler DAW und einen Sendeleistungsverstärker AMP beinhaltet.

Die Vorverzerrungseinrichtung PRE weist dabei einen ersten Eingang PRE1 und einen zweiten Eingang PRE2 auf, wobei zwischen dem ersten Eingang PRE1 und der ersten Basisstation BTS1 der digitale Filter DF1 angeordnet ist.

Dadurch gelangt das am digitalen ersten Filter DF1 angeschaltete, digitale Ausgangssignal AS1 der ersten Basisstation BTS1 als erstes Eingangssignal PRES1 an die Vorverzerrungseinrichtung PRE.

Das Eingangssignal PRES1 ist dabei beispielsweise einem ersten Frequenzbereich FRQ1 zugeordnet - z.B. einem Basisbandfrequenzbereich, einem Zwischenfrequenzbereich oder einem Trägerfrequenzbereich.

Über den zweiten Eingang PRE2 wird der Vorverzerrungseinrichtung PRE ein digitales zweites Eingangssignal PRES2 zugeführt, wobei die Vorverzerrungseinrichtung PRE aus dem ersten Eingangssignal PRES1 und aus dem zweite Eingangssignal PRES2 ein vorverzerrtes Summensignal SUM bildet.

Zur Vorverzerrung werden bekannte Verfahren der digitalen Vorverzerrung verwendet. Beispielsweise wird ein "Clipping-Verfahren" verwendet, mit dem ein minimales "Peak-to-Average-Verhältnis, PAR" erhalten wird.

Die Vorverzerrungseinrichtung PRE ist über den D/A-Wandler DAW und über den ihr nachgeschalteten Sendeleistungsverstärker AMP mit der Antennenanordnung ANT verbunden, so dass das Summensignal SUM über die gemeinsame Antennenanordnung ANT zur Abstrahlung gelangt.

Die zweite Basisstation BTS2 ist erfindungsgemäß ausgangsseitig über eine Umwandlungseinrichtung UWE mit dem zweiten Eingang PRE2 der Vorverzerrungseinrichtung PRE derart verbunden, dass das analoge Ausgangssignal AS2 der zweiten Basisstation BTS2 als Eingangssignal an die Umwandlungseinrichtung UWE gelangt.

Die Umwandlungseinrichtung UWE beinhaltet Mittel, die das angeschaltete analoge Ausgangssignal AS2 der zweiten Basisstation BTS2 analog-digital-wandeln, hier einen Analog-DigitalWandler DAW. Der A/D-Wandler ADW ist ausgangsseitig an den zweiten Eingang PRE2 der Vorverzerrungseinrichtung PRE direkt oder indirekt anschaltbar. Das digital-gewandelte Ausgangssignal des A/D-Wandlers ADW gelangt als zweites Eingangssignal PRES2 über den zweiten Eingang PRE2 an die Vorverzerrungseinrichtung PRE.

In einer vorteilhaften Weiterbildung weist die Umwandlungseinrichtung UWE außerdem eine Serienschaltung aus einem analogen Filter AF1 und einen Mischer M4 auf, wobei das analoge Ausgangssignal AS2 der zweiten Basisstation BTS2 an den analogen Filter AF1 eingangsseitig angeschaltet ist.

Durch den Mischer M4 kann eine Umsetzung des analogen Ausgangssignals AS2 der zweiten Basisstation BTS2 beispielsweise in den ersten Frequenzbereich FRQ1 erfolgen.

Vorteilhafterweise ist der erste digitale Filter DF1 über einen Mischer M1 mit dem ersten Eingang PRE1 der Vorverzerrungseinrichtung PRE verbunden, während der A/D-Wandler ADW ausgangseitig über eine Serien- bzw. Reihenschaltung aus einem digitalen Filter DF2 und einen Mischer M2 mit dem zweiten Eingang PRE2 der Vorverzerrungseinrichtung PRE verbunden ist. Durch den ersten Mischer M1 und durch den zweiten Mischer M2 erfolgt beispielsweise eine Umsetzung der zugeführten Signale in einen zweiten Frequenzbereich FRQ2.

Beispielsweise erfolgt eine Frequenzumsetzung aus einem Basisbandfrequenzbereich - hier FRQ1 - in einen Zwischenfrequenzbereich oder in einen Trägerfrequenzbereich - hier FRQ2.

In einer vorteilhaften Weiterbildung ist der D/A-Wandler DAW der Sendeeinrichtung SE ausgangsseitig über einen Mischer M3 mit dem Sendeleistungsverstärker AMP verbunden, wobei durch den dritten Mischer M3 eine Umsetzung des zugeführten Signals in einen dritten Frequenzbereich FRQ3 erfolgen kann.

Unter der Voraussetzung, dass der erste Frequenzbereich FRQ1 ein Basisbandfrequenzbereich ist, könnte dann der zweite Frequenzbereich FRQ2 ein Zwischenfrequenzbereich sein, während dann der dritte Frequenzbereich FRQ3 ein Trägerfrequenzbereich wäre.

In einer weiteren vorteilhaften Weiterbildung ist das digitale Ausgangssignal AS1 der ersten Basisstation BTS1 über einen als "Switch" bezeichneten Schalter CPRI1 eines so genannten "Common Public Radio Interface, CPRI" an den digitalen Filter DF1 der Sendeeinheit SE angeschaltet.

Funktionen und Ausgestaltungen eines bekannten CPRI-Interface sind beispielsweise aus der CPRI-Specification, Version V2.0, 2004-10-01, die beispielsweise unter der Internet-Adresse http://www.cpri.info veröffentlicht ist, bekannt.

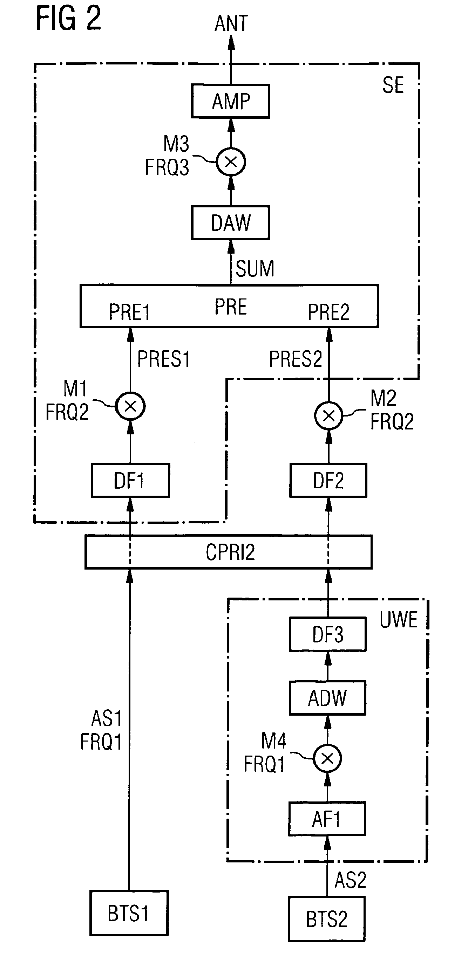

FIG 2 zeigt mit Bezug auf Einzelelemente der FIG 1 eine zweite Ausgestaltung der erfindungsgemäßen Anordnung für eine Zusammenfassung des digitalen Ausgangssignals AS1 der ersten Basisstation BTS1 und des analogen Ausgangssignals AS2 der zweiten Basisstation BTS2.

Wieder wird das digitale Ausgangssignal AS1 der ersten Basisstation BTS1 über einen CPRI-Switch CPRI2 an den digitalen Filter DF1 der Sendeeinheit SE geführt.

Zusätzlich weist Umwandlungseinrichtung UWE einen digitalen Filter DF3 auf, der dem A/D-Wandler ADW ausgangsseitig nachgeschaltet ist. Ein durch den digitalen Filter DF3 gebildetes Ausgangssignal der Sendeeinrichtung SE wird ebenfalls über den CPRI-Switch CPRI2 geführt und gelangt letztlich an die Sendeeinheit SE.

Durch die Übertragung über die CPRI-Schnittstelle ist es möglich, die Signalverarbeitung vorteilhaft auf zwei Baugruppen aufzuteilen, wobei eine räumliche Trennung der beiden Baugruppen vorteilhaft möglich ist.

Dadurch wird beispielsweise eine so genannte "Tower-Mounted-Radio" Anordnung oder ein "Remote-Radio-Head" mit räumlich abgesetzten Teilen einer nachträglich erweiterbaren Basisstation mit geringem Aufwand ermöglicht.

Beispielsweise wird eine erste Baugruppe durch die Sendeeinheit SE und der Serienschaltung aus dem zweiten Mischer M2 einerseits und dem zweiten digitalen Filter DF2 andererseits gebildet, während eine zweite Baugruppe aus der Umwandlungseinrichtung UWE gebildet wird.

Damit kann die erste Baugruppe antennennah angeordnet werden, während die zweite Baugruppe beispielsweise am Fuß eines Antennen-Trägermastes antennenfern angeordnet sein kann.

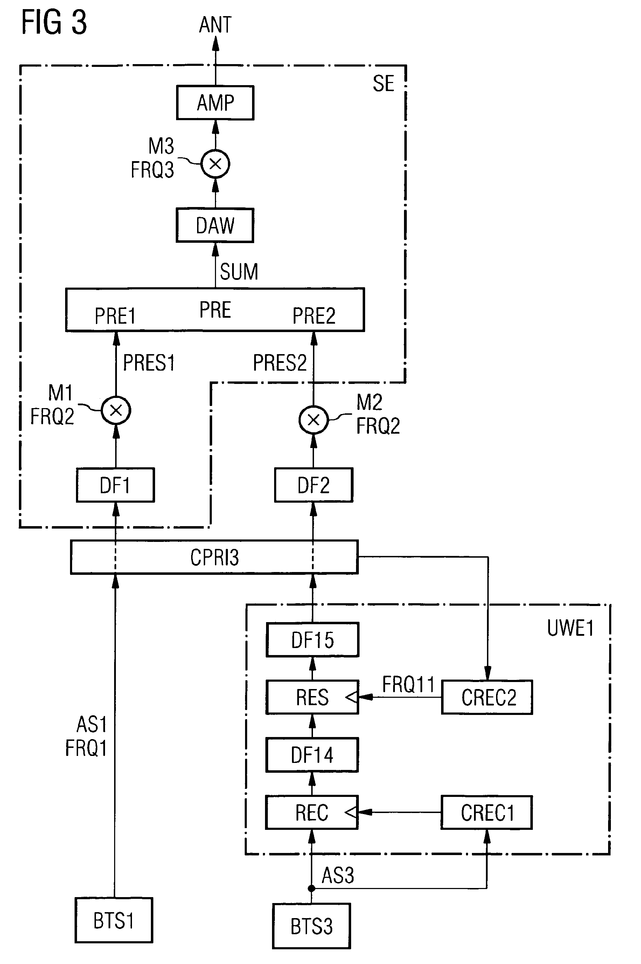

FIG 3 zeigt mit Verweis auf Elemente der FIG 1 und der FIG 2 eine dritte Ausgestaltung der erfindungsgemäßen Anordnung für eine Zusammenfassung eines digitalen Ausgangssignals AS1 der ersten Basisstation BTS1 und eines digitalen Ausgangssignals AS3 einer zweiten Basisstation BTS3, wobei die durch Kombination zusammengefassten Ausgangssignale über die gemeinsame Antennenanordnung ANT zur Abstrahlung kommen.

Zwischen der ersten Basisstation BTS1 und der Antennenanordnung ANT ist wieder die Sendeeinheit SE angeordnet, die den digitalen ersten Filter DF1, eine Vorverzerrungseinrichtung PRE, einen D/A-Wandler DAW und einen Sendeleistungsverstärker AMP beinhaltet.

Der digitale erste Filter DF1 ist mit einem ersten Eingang PRE1 der Vorverzerrungseinrichtung PRE verbunden, so dass das am digitalen ersten Filter DF1 angeschaltete digitale Ausgangssignal AS1 der ersten Basisstation BTS1 als erstes Eingangssignal PRES1 an die Vorverzerrungseinrichtung PRE gelangt.

Das erste Eingangssignal PRES1 ist beispielsweise einem ersten Frequenzbereich FRQ1 zugeordnet - z.B. einem Basisbandfrequenzbereich oder einem Trägerfrequenzbereich oder einem Zwischenfrequenzbereich.

Die Vorverzerrungseinrichtung PRE weist einen zweiten Eingang PRE2 auf, an den ein zweites Eingangssignal PRES2 angeschaltet ist. Die Vorverzerrungseinrichtung PRE bildet aus dem ersten Eingangssignal PRES1 und aus dem zweiten Eingangssignal PRES2 ein vorverzerrtes Summensignal SUM, das letztlich zur Abstrahlung über die gemeinsame Antennenanordnung ANT gelangt.

Die Vorverzerrungseinrichtung PRE ist über den D/A-Wandler DAW und über den ihr nachgeschalteten Sendeleistungsverstärker AMP mit der Antennenanordnung ANT verbunden.

Zur Vorverzerrung werden bekannte Verfahren der digitalen Vorverzerrung verwendet. Beispielsweise wird ein "Clipping-Verfahren" verwendet, mit dem ein minimales "Peak-to-Average-Verhältnis, PAR" erhalten wird.

Die zweite Basisstation BTS3 ist ausgangsseitig über eine Umwandlungseinrichtung UWE1 mit dem zweiten Eingang PRE2 der Vorverzerrungseinrichtung PRE direkt oder indirekt derart verbunden, dass das Ausgangssignal AS3 der zweiten Basisstation BTS3 als zweites Eingangssignal PRES2 an den zweiten Eingang PRE2 der Vorverzerrungseinrichtung PRE gelangt.

In einer vorteilhaften Weiterbildung weist die Umwandlungseinrichtung UWE1 seriell aneinander geschaltet eine Einrichtung zur Datenwiederherstellung REC, einen digitalen Filter DF14, eine Einrichtung zur digitalen Frequenzumsetzung RES und einen weiteren digitalen Filter DF5 auf.

Das digitale Ausgangssignal AS3 der zweiten Basisstation BTS3 ist an die Einrichtung zur Datenwiederherstellung REC angeschaltet, während der digitale Filter DF15 ausgangsseitig an den zweiten Eingang PRE2 der Vorverzerrungseinrichtung PRE anschaltbar ist.

Durch die Einrichtung zur digitalen Frequenzumsetzung RES wird eine Umsetzung des digitalen Ausgangssignals AS3 der zweiten Basisstation BTS3 beispielsweise in den ersten Frequenzbereich FRQ1 durchgeführt.

Diesem Frequenzbereich FRQ1 ist beispielsweise auch das digitale Ausgangssignal AS1 der ersten Basisstation BTS1 zugeordnet.

Der digitale Filter DF1 der Sendeeinrichtung SE ist vorteilhafterweise über einen Mischer M1 mit dem ersten Eingang PRE1 der Vorverzerrungseinrichtung PRE verbunden. Ebenso ist der digitale Filter DF15 der Umwandlungseinrichtung UWE1 ausgangseitig über einen CPRI-Switch CPRI3 und über eine Reihenschaltung, die einen digitalen Filter DF2 und Mischer M2 beinhaltet, mit dem zweiten Eingang PRE2 der Vorverzerrungseinrichtung PRE verbunden.

Durch den Mischer M1 und durch den Mischer M2 kann eine Umsetzung der jeweils zugeführten Signale in einen zweiten Frequenzbereich FRQ2 erfolgen.

Beispielsweise erfolgt mit deren Hilfe eine Frequenzumsetzung aus einem Basisbandfrequenzbereich - hier FRQ1 - in einen Zwischenfrequenzbereich oder Trägerfrequenzbereich - hier FRQ2.

Der D/A-Wandler DAW der Sendeeinrichtung SE ist ausgangsseitig über einen Mischer M3 mit dem Sendeleistungsverstärker AMP verbunden, wobei durch den Mischer M3 eine Umsetzung des zugeführten Signals in einen dritten Frequenzbereich FRQ3 erfolgen kann.

Unter der Voraussetzung, dass der erste Frequenzbereich FRQ1 ein Basisbandfrequenzbereich ist, könnte der zweite Frequenzbereich FRQ2 ein Zwischenfrequenzbereich sein, während der dritte Frequenzbereich FRQ3 ein Trägerfrequenzbereich sein könnte.

In einer weiteren vorteilhaften Weiterbildung ist das digitale Ausgangssignal AS1 der ersten Basisstation BTS1 über den CPRI-Schalter CPRI3 an den digitalen Filter DF1 der Sendeeinheit SE angeschaltet.

Die Umwandlungseinrichtung UWE1 weist eine erste Einrichtung zur Taktwiederherstellung CREC1 auf, an die eingangsseitig das digitale Ausgangssignal AS3 der zweiten Basisstation BTS3 angeschaltet ist und die ausgangsseitig mit der Einrichtung zur Datenwiederherstellung REC verbunden ist.

Weiter weist die Umwandlungseinrichtung UWE1 eine zweite Einrichtung zur Taktwiederherstellung CREC2 auf, an die eingangsseitig ein Ausgangssignal des Schalters CPRI3 angeschaltet ist und die ausgangsseitig mit der Einrichtung zur digitalen Frequenzumsetzung RES verbunden ist.

Dies ist für den Fall notwendig, dass die erste Basisstation BTS1 ein anderes Taktsystem als die zweite Basisstation BTS3 verwendet. Dabei wird zur Umsetzung in das Taktsystem der ersten Basisstation BTS1 üblicherweise eine Abtastratenerhöhung und eine anschließende digitale Filterung durchgeführt.

Erfolgt eine Umsetzung in das Taktsystem der ersten Basisstation BTS1 mittels einer eigenen Baugruppe, ist es vorteilhaft, wenn das Taktsystem der ersten Basisstation BTS1 aus dem digitalen Interface CPRI wieder- bzw. zurückgewonnen wird.

## Patentansprüche

1. Anordnung zur Kombination von Ausgangssignalen zweier Basisstationen,
- mit einer ersten Basisstation (BTS1), einer zweiten Basisstation (BTS2, BTS3) und mit einer gemeinsamen Antennenanordnung (ANT) zur Abstrahlung der kombinierten Ausgangssignale der ersten und der zweiten Basisstation (BTS1, BTS2, BTS3),
- mit einer Sendeeinheit (SE), die zwischen der ersten Basisstation (BTS1) und der Antennenanordnung (ANT) angeordnet ist und die einen digitalen ersten Filter (DF1), eine Vorverzerrungseinrichtung (PRE) mit einem ersten und mit einem zweiten Eingang (PRE1, PRE2), einen D/A-Wandler (DAW) und einen Sendeleistungsverstärker (AMP) beinhaltet,
- bei der die erste Basisstation (BTS1) ausgangsseitig über den ersten Filter (DF1) mit dem ersten Eingang (PRE1) der Vorverzerrungseinrichtung (PRE) verbunden ist, so dass ein digitales Ausgangssignal (AS1) der ersten Basisstation (BTS1) als erstes Eingangssignal (PRES1) an die Vorverzerrungseinrichtung (PRE) gelangt,
- bei der die Vorverzerrungseinrichtung (PRE) ausgangsseitig über den D/A-Wandler (DAW) und den Sendeleistungsverstärker (AMP) mit der Antennenanordnung (ANT) verbunden ist, so dass ein durch die Vorverzerrungseinrichtung (PRE) gebildetes Summensignal (SUM) an die Antennenanordnung (ANT) gelangt, wobei das Summensignal (SUM) aus dem digitalen ersten Eingangssignal (PRES1) und aus einem am zweiten Eingang (PRE2) der Vorverzerrungseinrichtung (PRE) angeschalteten digitalen zweiten Eingangssignal (PRES2) gebildet wird,
**dadurch gekennzeichnet,**
**dass** die zweite Basisstation (BTS2) ausgangsseitig über eine Umwandlungseinrichtung (UWE), die aus dem Ausgangssignal (AS2) der zweiten Basisstation (BTS2) das zweite Eingangssignal (PRES2) bildet, mit dem zweiten Eingang (PRE2) der Vorverzerrungseinrichtung (PRE) verbunden ist.

2. Anordnung nach Anspruch 1, **dadurch gekennzeichnet, dass** die Umwandlungseinrichtung (UWE) einen Analog-DigitalWandler (ADW) beinhaltet, über den ein analoges Ausgangssignal (AS2) der zweiten Basisstation (BTS2) analog-digital-gewandelt als digitales zweites Eingangssignal (PRES2) an den zweiten Eingang ((PRE2) der Vorverzerrungseinrichtung (PRE) gelangt.

3. Anordnung nach Anspruch 2, **dadurch gekennzeichnet, dass** die Umwandlungseinrichtung (UWE) einen analogen Filter (AF1) beinhaltet, der eingangsseitig mit der zweiten Basisstation (BTS2) und ausgangsseitig mit dem A/D-Wandler (ADW) verbunden ist, so dass das analoge Ausgangssignal (AS2) der zweiten Basisstation (BTS2) über den analogen Filter (AF1) an den A/D-Wandler (ADW) gelangt.

4. Anordnung nach Anspruch 3, **dadurch gekennzeichnet,**
- **dass** die Umwandlungseinrichtung (UWE) einen Mischer (M4) aufweist, der zwischen dem analogen Filter (AF1) und dem A/D-Wandler (ADW) angeordnet ist, und
- **dass** der Mischer (M4) zur Umsetzung des analogen Ausgangssignals (AS2) der zweiten Basisstation (BTS2) in einen ersten Frequenzbereich (FRQ1) ausgestaltet ist.

5. Anordnung nach Anspruch 1 oder 4, **dadurch gekennzeichnet, dass** das digitale Ausgangssignal (AS1) der ersten Basisstation (BTS1) einem ersten Frequenzbereich (FRQ1) zugeordnet ist.

6. Anordnung nach Anspruch 2, **dadurch gekennzeichnet,**
- **dass** zwischen dem A/D-Wandler (ADW) der Umwandlungseinrichtung (UWE) und dem zweiten Eingang (PRE2) der Vorverzerrungseinrichtung (PRE) eine Serienschaltung, die einen digitalen Filter (DF2) und einen Mischer (M2) umfasst, angeordnet ist,
- **dass** der A/D-Wandler (ADW) ausgangsseitig mit dem digitalen Filter (DF2) der Serienschaltung verbunden ist,
- **dass** der Mischer (M2) der Serienschaltung ausgangsseitig mit dem zweiten Eingang (PRE2) der Vorverzerrungseinrichtung (PRE) verbunden ist, und
- **dass** der Mischer (M2) zur Umsetzung eines Ausgangssignals des digitalen Filters (DF2) der Serienschaltung in einen zweiten Frequenzbereich (FRQ2) ausgestaltet ist.

7. Anordnung nach Anspruch 6, **dadurch gekennzeichnet,**
- **dass** in der Sendeeinheit (SE) zwischen dem digitalen Filter (DF1) und dem ersten Eingang (PRE1) der Vorverzerrungseinrichtung (PRE) ein Mischer angeordnet ist,
- der zur Umsetzung eines Ausgangssignals des digitalen Filters (DF1) der Sendeeinrichtung (SE) in den zweiten Frequenzbereich (FRQ2) ausgestaltet ist.

8. Anordnung nach Anspruch 1, **dadurch gekennzeichnet,**
- **dass** in der Sendeeinrichtung (SE) der D/A-Wandler (DAW) ausgangsseitig über einen weiteren Mischer (M3) mit dem Sendeleistungsverstärker (AMP) verbunden ist, und
- **dass** dieser weitere Mischer (M3) zur Umsetzung des digital-analog-gewandelten Summensignals (SUM) in einen dritten Frequenzbereich (FRQ3) ausgestaltet ist.

9. Anordnung nach Anspruch 1, **dadurch gekennzeichnet, dass** das digitale Ausgangssignal (AS1) der ersten Basisstation (BTS1) über einen CPRI-Switch (CPRI1) an den digitalen Filter (DF1) der Sendeeinrichtung (SE) angeschaltet ist.

10. Anordnung nach Anspruch 1, **dadurch gekennzeichnet, dass** zwischen der Umwandlungseinrichtung (UWE) und der Sendeeinrichtung (SE) ein CPRI-Switch derart angeordnet ist, dass sowohl das digitale Ausgangssignal (AS1) der ersten Basisstation (BTS1) als auch das analog-digital-gewandelte Ausgangsignal der zweiten Basisstation an die Sendeinrichtung (SE gelangt.

11. Anordnung nach Anspruch 1, **dadurch gekennzeichnet,**
- **dass** die Umwandlungseinrichtung (UWE1) seriell aneinander geschaltet eine Einrichtung zur Datenwiederherstellung (REC), einen ersten digitalen Filter (DF14), eine Einrichtung zur digitalen Frequenzumsetzung (RES) und einen zweiten digitalen Filter (DF15) aufweist,
- **dass** die zweite Basisstation (BTS3) ein digital ausgestaltetes Ausgangssignal (AS3) aufweist, das eingangsseitig an die Einrichtung zur Datenwiederherstellung (REC) angeschaltet ist, und
- **dass** der digitale zweite Filter (DF15) ausgangsseitig mit dem zweiten Eingang (PRE2) der Vorverzerrungseinrichtung (PRE) verbunden ist.

12. Anordnung nach Anspruch 11, **dadurch gekennzeichnet,**
- **dass** zwischen dem zweiten digitalen Filter (DF15) der Umwandlungseinrichtung (UWE1) und dem zweiten Eingang (PRE2) der Vorverzerrungseinrichtung (PRE) eine Serienschaltung, die einen digitalen Filter (DF2) und einen Mischer (M2) umfasst, angeordnet ist,
- **dass** der zweite digitale Filter (DF15) ausgangsseitig mit dem digitalen Filter (DF2) der Serienschaltung verbunden ist,
- **dass** der Mischer (M2) der Serienschaltung ausgangsseitig mit dem zweiten Eingang (PRE2) der Vorverzerrungseinrichtung (PRE) verbunden ist, und
- **dass** der Mischer (M2) zur Umsetzung eines Ausgangssignals des digitalen Filters (DF2) der Serienschaltung in einen zweiten Frequenzbereich (FRQ2) ausgestaltet ist.

13. Anordnung nach Anspruch 12, **dadurch gekennzeichnet,**
- **dass** in der Sendeeinheit (SE) zwischen dem digitalen Filter (DF1) und dem ersten Eingang (PRE1) der Vorverzerrungseinrichtung (PRE) ein Mischer angeordnet ist,
- der zur Umsetzung eines Ausgangssignals des digitalen Filters (DF1) der Sendeeinrichtung (SE) in den zweiten Frequenzbereich (FRQ2) ausgestaltet ist.

14. Anordnung nach Anspruch 11, 12 oder 13, **dadurch gekennzeichnet, dass** zwischen der Umwandlungseinrichtung (UWE1) und der Sendeeinrichtung (SE) ein CPRI-Switch (CPRI3) derart angeordnet ist, dass sowohl das digitale Ausgangssignal (AS1) der ersten Basisstation (BTS1) als auch das durch den digitalen zweiten Filter (DF15) gefilterte Ausgangsignal der Umwandlungseinrichtung (UWE1) an die Sendeinrichtung (SE) gelangt.

15. Anordnung nach Anspruch 14, **dadurch gekennzeichnet,**
- **dass** die Umwandlungseinrichtung (UWE1) eine erste Einrichtung zur Taktwiederherstellung (CREC1) aufweist, an die eingangsseitig das digitale Ausgangssignal (AS3) der zweiten Basisstation (BTS3) angeschaltet ist und die ausgangsseitig mit einem Takteingang der Einrichtung zur Datenwiederherstellung (REC) verbunden ist, und
- **dass** die Umwandlungseinrichtung (UWE1) eine zweite Einrichtung zur Taktwiederherstellung (CREC2) aufweist, an die eingangsseitig ein Ausgangssignal des CPRI-Switch (CPRI3) angeschaltet ist und die ausgangsseitig mit einem Takteingang der Einrichtung zur digitalen Frequenzumsetzung (RES) verbunden ist.
